# EUROPEAN PATENT APPLICATION

(11) **EP 1 486 124 A1**
(43) Date of publication of application: **15.12.2004**
(21) Application number: 03425359.1
(22) Date of filing: 09.06.2003
(51) Int. Cl.: A23C 19/05

(54) **Preparation of a dairy product**

(71) Applicant: S.p.A. Egidio Galbani, 20066 Melzo (IT)
(72) Inventor: Mattei, Gianfranco, c/o S.p.A. Egidio Galbani, 20066 Melzo (Milano) (IT)
(74) Representative: Long, Giorgio

(57) **Abstract**

The present invention relates to a procedure for the preparation of a dairy product and the diary product thus obtained. In particular, said dairy product is a medium matured uncooked curd cheese.

More particularly, the present invention relates to a procedure for the production of a dairy product, wherein a mixture of milk cream and milk are subjected to curdling, comprising a homogenisation stage of said milk cream prior to the formation of said mixture. Preferably, said milk cream is previously added to with milk in a quantity comprised of between 2% and 10% v/v.

## Description

The present invention relates to a procedure for the preparation of a dairy product and the dairy product thus obtained. In particular, said dairy product is a medium matured uncooked curd cheese.

On the market, there are various industrially produced cheeses with medium maturation times, i.e. cheeses seasoned for a period of around a month. Such cheeses, despite having a non-creamy consistency and a crust, for the most part artificial such as a plastification, must however give the sensation of freshness and softness and have high palatability. Another worthwhile and desirable aspect for such types of cheese is their meltability, which reveals itself as being particularly interesting for their uses in the kitchen.

Such desirable characteristics are obtainable with difficulty in cheeses of this type, mainly due to the seasoning which causes the maturation of the curd.

The basic problem of the present invention is therefore that of making available a procedure for the preparation of a dairy product, in particular a medium matured cheese, which has the improved characteristics of softness, meltability and palatability.

Such a problem is resolved by a procedure and a dairy product obtainable through such a procedure, as delineated in the attached claims.

The technique of homogenisation is known and used in various sectors, amongst which the food sector. The specific role of homogenisation is that of stably mixing two or more substances, all in the liquid phase, or liquid and solid, the quantitatively heavier phase being however the liquid phase. This mixing occurs through the breaking up of the particles in suspension in the liquid, which are reduced to extremely small dimensions (sub-micron) and homogeneously dispersed so as to obtain a stable suspension, i.e. a suspension in which the solid does not tend to separate again from the liquid phase.

The homogenisation technique envisages the use of a special apparatus - high pressure homogeniser - which consists of a piston pump which sends the suspension to be homogenised through a valve having an opening of micron scale dimensions. This valve, called the homogenising valve, causes a loss of load, which creates the need to operate at high pressures, generally from 50 up to 2000 bar, according to the applications. The homogenisation occurs according to various mechanisms, such as i) the explosion of the particles caused by the sudden cavitation of the small amounts of compressed air contained within the product, ii) the shear forces due to the friction of the product whilst passing through the valve window, iii) the shock of the larger particles against the impact ring of the valve and/or iv) high frequency vibrations.

The invention procedure comprises a homogenisation stage of the milk cream. It has been found that by adding to the milk cream, prior to homogenisation, a small amount of milk, preferably low fat milk, significant advantages in the final product are obtained. The addition of low fat milk to the cream favours the supply of proteins essential for the reformation of the protein membranes of the fat globules. This membrane, enveloping the fat globules, favours avoiding the separation of the fat phase from the emulsion and at the same time favours avoiding the loss of fat in the whey over the course of the later workings of the dairy product. Therefore a nutritionally more rich product is obtained.

The quantity of milk, preferably low fat milk, added to the cream is comprised of between 2% and 10% v/v, preferably between 4% and 7% v/v, more preferably around 5% v/v.

The milk enriched cream thus obtained is sent for homogenisation under pressure. Operation is normally at pressures comprised of between 50 and 150 bar, preferably between 80 and 120 bar, more preferably at pressures of around 100 bar.

Upon exiting from the homogeniser, the mixture is cooled. The cooling temperature is important, in as much as a temperature such as that which would increase the viscosity of the mixture would cause, in the later phases of working, an increase in the line pressure so as to provoke the churning of the product. Generally, the cooling temperature will be comprised of between 12°C and 17°C, preferably around 14-15°C.

The cream thus homogenised is then mixed with milk, preferably low fat milk, previously cooled, in quantities such as to obtain a milk fat/protein ratio comprised of between 1.10 and 1.20, preferably around 1.15. The operation is preferably carried out with stirring.

In the case in which, prior to further working, the milk must be stored for some time, the temperature of the mixture will be preferably less than 8°C and, in the case of a time interval of around 24 hours prior to later working, the temperature will be around 4°C.

The procedure of the invention therefore envisages, preferably, a pasteurisation stage at a temperature of 70-75°C and a successive cooling to 65-70°C, prior to the curdling stage.

In the curdling stage, the mixture is first of all added to with a natural starter culture and maintained at a temperature of 60-65°C for 20-30 minutes, then the mixture is acidified to a pH of around 6.30. Preferably, lactic acid diluted 1:10, is used as the acidifier.

By the term "natural starter culture" is intended a selected milk which following various fermentation steps develops natural milk enzymes in large quantities. For example, a first portion of non refrigerated raw milk is heated to a temperature of no less than 63°C for a minimum time of 15 minutes and is then cooled to an incubation temperature of 42-50°C to an acidity of 14-24°SH per 100 ml. At this point, such fermented milk is inoculated into a second portion of raw milk, which can also be refrigerated, and it is treated as previously described. The operation is repeated several times (for example, 5 times) so as to obtain the starter culture, which must have an acidity comprised of between 16 and 30°SH per 100 ml, have a minimum *Streptococcus thermophilus* content of 10⁸ cfu/ml (cfu = colony forming units), have negative phosphatase activity and be used in production within 3 days of its preparation. The milk enzymes thus produced are initially responsible for the acidification of the curds and later participate towards the ageing (aroma, structure) of the product.

The mixture is then transferred into the curdling polyvalents where the rennet is added to the mixture maintained at a temperature of 35-45°C, preferably around 40°C. The rennet is preferably veal calf rennet diluted 1:3.

After a time sufficient for the formation of the coagulate to occur, its hardening and the later cutting of the curds; this is maintained stirring for some minutes and is then transferred to the whey elimination stage, which will preferably take place by means of appropriate conventional type whey-draining rollers. The curd is then arranged into moulds and subjected to conventional stewing, turning, salting, turning out operations and, possibly, treatment with preservatives.

Over the course of the ageing, which will last in general between 25 and 35 days, more preferably around 30 days, the diary product of the invention could undergo a plastification or paraffinisation. The plastification is preferably performed with a vinyl acetate based polymer and has the advantage of checking the growth of mould, of protecting the product and limiting its natural reduction in weight.

The plasticized product, at the end of ageing, can be packaged into perforated parchment paper and into cardboard, itself also perforated. The perforations in the packaging avoid the accumulation of humidity which would promote the formation of mould.

The diary product of the invention is preferably a medium matured cheese. The maturing which, as already said, lasts for 25-35 days, allows the formation of a proper crust which has the aim of protecting the product from the development of moulds and creates an impermeable protective barrier to restrict the exchange of water between the interior and exterior of the product. Last but not least, the presence of the crust increases the contrast between the soft interior of the product and the exterior, mostly giving the visible sensation of softness and freshness.

In the following will be illustrated, for non limiting exemplification, the preparation of a medium matured cheese according to the invention.

### EXAMPLE OF THE PREPARATION OF A SEMI-SOFT MEDIUM MATURED UNCOOKED CURD CHEESE

9.5 l of milk cream are mixed with 0.5 l of low fat milk and the resulting mixture is then pasteurised at 70°C for 80 seconds and sent to a single stage homogeniser (working pressure 100 bar).

Upon exit from the homogeniser, the mixture is cooled to around 14°C and sent to a reservoir containing low fat milk in such a quantity as to obtain a final milk fat/protein ratio of 1.15. The temperature is then adjusted to below 8°C for the storage of the mixture for some hours.

The milk and cream mixture is then pasteurised at 73°C for 23 seconds, cooled to 68°C and then transferred into a "lung" tank where the addition of a natural starter culture takes place. In such a reservoir the mixture rests for 25 minutes and is maintained at a temperature of around 63°C. At the end of such a period, lactic acid diluted 1:10 is added to the mixture so as to obtain a pH=6.30.

The mixture is then transferred into a polyvalent reservoir thermostated to 40°C, where veal calf rennet diluted 1:3 is added. Following a period of around 450 seconds for the rennet to take and a period of around 180 seconds for the solidification of the curd, this is cut and then it is all agitated for a period of around 250 seconds, after which the mixture is unloaded from the polyvalent reservoir.

The curd is transferred, by means of pneumatic pumps, onto the whey-draining rollers for the elimination of the whey, then the curd is placed into a hopper for filling into the moulds, shaped for a "bare product" shape of 210 mm in diameter and 80 mm in height. In this operative stage the working temperature is around 40°C.

The shapes in the moulds are subjected to a series of turnings and stewings and a first salting in brine (T=13°C, NaCl 21°Baumé, pH=5.15, t=6 hours) prior to being turned out from the moulds.

The turned out shapes are then transferred into the seasoning cells, where they are subjected to conventional repeated salting treatments (in total, four saltings) and turning. Following the first 13-18 days of maturation, the plastification of the first side occurs. The plastification of the second side, instead, takes place over the following 18-23 days of maturation. The cheese has reached its correct maturation after around 30 days of seasoning. The casts have a mean weight of 2400 g. A soft curd product, ivory-white in colour and easily meltable is obtained.

The dairy product of the invention accomplishes the initially established purposes. The homogenisation procedure to which the cream and milk are previously subjected imparts onto the product, firstly, greater softness and meltability with respect to other analogous products, thanks to a reduction in the mean diameter of the fat globules and a reduction in their mean diameter statistical distribution.

In addition, the cheese curd emerges as being whiter in colour, which confers the appearance of greater freshness onto the product.

In addition, the procedure of the invention allows for greater appreciation of the milk constituents. In fact, it has been observed that the casein micelles, under the effect of homogenisation, attach onto the surfaces of the fat globules. During the caseification process, the fat globules, being bound to the casein, remain within the cheese in greater quantities instead of passing into the whey, with the consequent limiting of the loss of materials in the whey.

Furthermore, it has been observed that the homogenisation process results in greater water retention within the product, which contributes towards the softness of the curd.

Finally, even the maturation and the development of the typical aromas of the product are accelerated. In fact, the fat globules, being smaller and more numerous, are more sensitive to lipolysis.

It is understood that that which has been described is only a particular embodiment of the procedure of the invention, to which those skilled in the art will be able to make small changes for adapting it to specific requirements, without, despite this, departing from the scope of the present invention.

## Claims

1. A procedure for the production of a dairy product, wherein a mixture of milk cream and milk are subjected to curdling, comprising a homogenisation stage of said milk cream prior to the formation of said mixture.

2. The procedure according to claim 1, wherein said milk cream is previously added to with milk in a quantity comprised of between 2% and 10% v/v.

3. The procedure according to claim 2, wherein said milk cream is added to with milk in a quantity comprised of between 4% and 7% v/v, preferably around 5% v/v.

4. The procedure according to any of the claims from 1 to 3, wherein said milk is low fat milk.

5. The procedure according to any of the claims 1 to 4, wherein said homogenisation is carried out under pressure at a pressure comprised of between 50 and 150 bar.

6. The procedure according to claim 5, wherein said homogenisation is carried out at a pressure comprised of between 80 and 120 bar, preferably at around 100 bar.

7. The procedure according to any of the claims 1 to 6, wherein said mixture of homogenised cream and milk is pasteurised prior to being subjected to curdling.

8. The procedure according to any of the claims 1 to 7, wherein said dairy product is a medium matured cheese, preferably an uncooked curd medium matured cheese.

9. The procedure according to any of the claims 1 to 8, wherein said homogenisation stage is followed by a cooling stage of said milk cream to a temperature comprised of between 12°C and 17°C, preferably of around 14-15°C.

10. The procedure according to any of the claims 1 to 9, said procedure further comprising a stage wherein said homogenised milk cream is added to by an additional quantity of milk, preferably low fat milk, previously cooled, in such a quantity as to obtain a milk fat/protein ratio comprised of between 1.10 and 1.20, preferably around 1.15.

11. The procedure according to any of the claims 1 to 10, wherein said cream/milk mixture, prior to curdling, is added to with a natural starter culture and then acidified to a pH of around 6.30.

12. The procedure according to claim 11, wherein lactic acid, diluted 1:10, is used as an acidifying agent.

13. The procedure according to any of the claims 1 to 12, wherein said cream/milk mixture is added to by rennet, preferably veal calf rennet diluted 1:3.

14. The procedure according to claim 13, wherein said curdling stage is carried out at a temperature of 35-45°C, preferably around 40°C.

15. The procedure according to any of the claims 1 to 14, wherein the curd, following elimination of the whey, is placed into moulds and subjected to conventional stewing, turning, salting, turning out operations and, possibly, treatment with preservatives.

16. The procedure according to any of the claims 1 to 15, wherein said dairy product is subjected to a seasoning stage lasting between 25 and 35 days, preferably around 30 days.

17. The procedure according to claim 16, wherein said dairy product is subjected to plastification, preferably with a vinyl acetate based polymer, or paraffinisation.

18. The procedure according to any of the claims 1 to 17, wherein said dairy product is packaged in a perforated wrapping.

19. The procedure according to claim 18, wherein said perforated wrapping is in parchment and/or in cardboard.

20. The dairy product obtainable through the procedure delineated in any of the claims 1 to 19.

21. The dairy product according to claim 20, wherein said dairy product is a medium matured uncooked curd cheese.
